Europäisches Patentamt

European Patent Office

Office européen des brevets

(19)

(11) Veröffentlichungsnummer: **0 009 575**
**A1**

(12) **EUROPÄISCHE PATENTANMELDUNG**

(21) Anmeldenummer: **79102888.9**

(22) Anmeldetag: **09.08.79**

(51) Int. Cl.³: **G 01 N 27/82**
**G 21 C 17/00, G 21 D 5/08**

(30) Priorität: **28.08.78 DE 2837488**

(43) Veröffentlichungstag der Anmeldung:
**16.04.80 Patentblatt 80/8**

(84) Benannte Vertragsstaaten:
**CH FR GB NL SE**

(71) Anmelder: **KRAFTWERK UNION**
**AKTIENGESELLSCHAFT**
**c/o SIEMENS AG Postfach 261**
**D-8000 München 22(DE)**

(72) Erfinder: **Kastl, Hans**
**Tulpenstrasse 11**
**D-8482 Neustadt(DE)**

(72) Erfinder: **Folger, Robert**
**Neutorstrasse 3**
**D-8500 Nürnberg(DE)**

(74) Vertreter: **Mehl, Ernst, Dipl.-Ing. et al,**
**Postfach 22 01 76**
**D-8000 München 22(DE)**

(54) Einrichtung zur Prüfung der Rohre von Wärmetauschern.

(57) Zur Prüfung der Rohre von Wärmetauschern mit einem U-Rohrbündel wird eine Prüfsonde (1) mit einem flexiblen Schubschlauch (12,21) in ein Rohr geschoben. Der Schubschlauch (12) ist in der Nähe der Prüfsonde (1) mit größerer Flexibilität ausgeführt und wesentlich dünner als das Rohr. Er Trägt Zentrierkörper (13), die den Schubschlauch vorzugsweise kugelförmig umgeben. Damit können auch die Rohrbögen der Dampferzeuger von Kernkraftwerken geprüft werden.

EP 0 009 575 A1

./...

KRAFTWERK UNION AKTIENGESELLSCHAFT    Unser Zeichen
VPA 78 P 9 3 8 4 · EUR

### Einrichtung zur Prüfung der Rohre von Wärmetauschern

Die Erfindung betrifft eine Einrichtung zur Prüfung der Rohre von Wärmetauschern mit einem U-Rohrbündel, wobei eine Prüfsonde mit einem flexiblen Schubschlauch in ein Rohr des Bündels geschoben wird.

Bei der aus der deutschen Patentschrift 2 263 143 bekannten Einrichtung zur Wirbelstromprüfung an den Dampferzeugern von Druckwasserreaktoren ist die Prüfsonde im engeren Sinne ein starrer Spulenkörper, der zwei parallel zueinander und quer zur Rohrachse angeordnete Ringspulen trägt und am freien Ende des flexiblen Schubschlauches sitzt. Der Durchmesser des länglichen Spulenkörpers ist praktisch ebenso groß wie der von Führungskörpern, mit denen der Schubschlauch an den Wänden des zu prüfenden Rohres laufen soll.

Beim Arbeiten mit solchen Einrichtungen hat es sich gezeigt, daß die Bögen eines U-Rohrbündels wegen der Krümmung besonders schwierig zu prüfen sind, denn dort

Sm 2 Syr / 22.8.1978

ist wegen der Umlenkungskräfte bei der Sondenführung eine besonders große Reibung vorhanden. Außerdem haben sich die Rohre beim Biegen oft verformt. Andererseits kann auf diese Prüfung nicht verzichtet werden, weil gerade in den Bögen wegen der erhöhten mechanischen Beanspruchung beim Biegen mit Fehlerstellen gerechnet werden muß.

Man könnte daran denken, die Einrichtung in bezug auf diese Schwierigkeiten dadurch zu verbessern, daß man die Schubkräfte erhöht, die mit dem felxiblen Schubschlauch über große Entfernungen von 30 m oder mehr übertragen werden müssen. Dies würde jedoch kräftigere Antriebe und Führungsschläuche erfordern und außerdem die Gefahr von Beschädigungen vergrößern, die durch Fehlersteuerung bei der Fernbedienung auftreten können.

Erfindungsgemäß ist vorgesehen, daß der Schubschlauch in seiner Längsrichtung zwei Teile unterschiedlicher Flexibilität umfaßt, und daß der Teil mit der größeren Flexibilität der Prüfsonde zugekehrt und wesentlich dünner als das Rohr ist und gerundete Zentrierkörper trägt, die den Schubschlauch ringförmig umgeben.

Mit der Erfindung wird der Schubschlauch also nicht versteift, um größere Schubkräfte auf die Prüfsonde überlagern zu können, sondern im Gegenteil in der Nähe der Sonde flexibler gemacht. Damit wird erreicht, daß die Kräfte, die für die Umlenkung von Sonde und Schubschlauch im Bereich der Bögen benötigt werden verringert sind. Einfach ausgedrückt bleibt die Sonde nicht mehr wegen zu großer Reibung stecken, so daß auch im Bereich von Bögen mit kleinen Krümmungsradien eine einwandfreie Prüfung möglich ist.

Bei einer bevorzugten Ausführungsform der Erfindung trägt die Prüfsonde auf der dem Schubschlauch abgekehrten Seite ein ähnlich flexibles Schlauchstück mit einer Einführungsspitze. Auf diese Weise kann die Prüfsonde auch bei geringer axialer Länge in der für die einwandfreie Prüfung wichtigen Mittellage gehalten werden. Die dadurch entstehende zusätzliche Reibung kann bei einer Länge vom 5- bis 15-fachen des Rohrdurchmessers in Kauf genommen werden, zumal die bessere Führung die Reibung an der Sonde selbst nennenswert herabsetzen kann.

Der flexiblere Teil des Schubschlauches kann sich über annähernd die Länge eines Schenkels des U-Rohrbündels erstrecken. Dann kann man mit geringen Kräften die Sonde nicht nur in den Bereich des U-Rohrbogens bewegen, sondern noch darüber hinaus, so daß der eine Schenkel des U-Rohrbündels von dem anderen Schenkel her geprüft werden kann. Dies bedeutet, daß das Umrüsten der Einrichtung für das Einführen in den anderen Schenkel eingespart werden kann. Bei Kernkraftwerken erreicht man auf diese Weise eine erhebliche Verringerung der Strahlenbelastung des Bedienungspersonals, da sonst die Positioniereinrichtungen für die Sondenführung im stark strahlenden Bereich der Primärkammern der Dampferzeuger umgerüstet werden müßten.

Die größere Flexibilität bezieht sich an sich nur auf die Biegesteifigkeit des Schubschlauches. Sie kann in verschiedener Weise erreicht werden. Zum Beispiel kann der Elastizitätsmodul des flexibleren Teiles um 25 bis 50 % kleiner als der des anderen Teils sein. Zur Erreichung eines kleineren Biegewiderstandes kann man auch beide Teile des Schubschlauches aus dem gleichen Material herstellen und den Querschnitt des flexibleren Teiles kleiner bemessen als den des anderen Teils. Insbesondere können beide Teile einen Ringquerschnitt mit dem gleichen Außendurchmesser haben und den Innendurchmesser des flexibleren Teils wird man dann größer machen als den des anderen Teils.

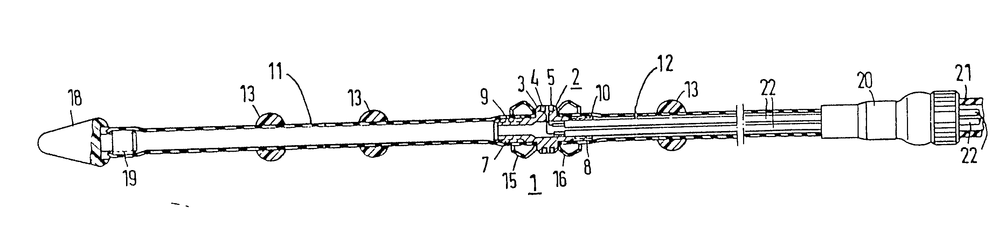

Zur näheren Erläuterung der Erfindung wird anhand der beiliegenden Zeichnung ein Ausführungsbeispiel beschrieben, das in der Figur in einem Längsschnitt durch eine Wirbelstromprüfsonde und Teile ihres Schubschlauches dargestellt ist. Die Prüfsonde soll für die Prüfung von Wärmetauscherrohren in Dampferzeugern von Druckwasserreaktoren eingesetzt werden, wie in der deutschen Patentschrift 2 263 143 beschrieben ist.

Die Prüfsonde 1 besitzt einen rotationssymmetrischen Spulenkörper 2 aus Polyoxymethylen mit einem Mittelteil 3, in dem zwei Spulen 4 und 5 eingebettet sind, und zwei symmetrisch dazu liegenden Endstücken 7 und 8. Das Mittelteil hat ein Verhältnis von Länge zu Durchmesser von weniger als 1:2. Die Endstücke 7 und 8 haben demgegenüber etwa den halben Durchmesser und die doppelte Länge. Sie sind mit einem Außengewinde 9 und 10 versehen. Auf dieses können zwei Schläuche 11 und 12 aufgesetzt, zum Beispiel aufgeschrumpft werden, die aus Polyvinylchlorid bestehen.

Die Schläuche 11 und 12 haben bei einem Durchmesser von 7 - 9 mm nur eine Wandstärke von etwa 1 mm. Deshalb sind sie nicht nur wesentlich dünner als die zu prüfenden Rohre, deren Innendurchmesser z.B. 20 mm beträgt, sondern auch sehr flexibel im Sinne von wenig biegesteif. Die Schläuche tragen auf ihrer Außenseite Führungskörper 13, die ebenfalls aus Polyoxymethylen bestehen und als Ringe mit dem aus der Figur ersichtlichen, halbkreisförmigen Querschnitt ausgebildet sind. Die Führungskörper 13 sind beim Ausführungsbeispiel äquidistant angeordnet. Ihr Abstand beträgt ein geringes Vielfaches, zum Beispiel das Dreifache des Rohrdurchmessers.

Anschließend an den Mittelteil 3 des Spulenkörpers 2 sind zwei gleiche, ringförmige Kappen 15 und 16 auf die Schläuche 11, 12 aufgesetzt, die einen annähernd winkelförmigen Querschnitt aufweisen. Die Wandstärke der Kappen ist etwa ebenso groß wie die der Schläuche 11 und 12 (1,5 mm), während der größte Durchmesser größer als der des Mittelteiles 3 ist. Die Kappen 15, 16 bestehen ebenfalls aus Polyoxymethylen oder aus einem ähnlichen Kunststoff, zum Beispiel einem Acetalcopolymerisat auf der Basis von Trioxan. Sie können geschlitzt sein, um die Flexibilität in radialer Richtung zu verbessern. Zusammen haben sie die Aufgabe, den Spulenkörper 2 mit den Spulen 4 und 5 auch im Bereich von Krümmungen möglichst genau in der Achse des zu prüfenden Rohres zu halten, ohne daß sich die Prüfsonde 1 an Verengungen, Ablagerungen oder dergleichen verklemmen kann.

Der Schlauch 11 trägt an seinem freien Ende eine Einführungsspitze 18, die mit einem Gewindezapfen 19 mit dem Schlauch 11 verbunden ist und aus Polyoxymethylen besteht. Der Abstand von der Einführungsspitze zur Mitte der Prüfsonde 1 beträgt bis ca. 150 mm. Über diese Länge sind zwei Führungskörper 13 verteilt.

An dem dem Spulenkörper 2 abgekehrten Ende des Schlauches 12 sitzt ein Stecker 20, der außer der mechanischen Verbindung mit einem starreren Schubschlauchteil 21 für den elektrischen Kontakt von Meßleitungen 22 sorgt, die von den Spulen 4, 5 ausgehen und durch den Schubschlauch verlaufen. Der Abstand zwischen dem Stecker 20 und dem Spulenkörper 2 beträgt 1300 mm. Über diese Länge sind 28 Führungskörper 13 verteilt, und zwar entweder äquidistant oder mit einem mit der Entfernung vom Spulenkörper 2 wachsenden Abstand.

Der Schubschlauch 12 ist um etwa 1/3 flexibler als der Schubschlauch 21 im Sinne von weniger biegesteif. Dies ergibt sich bei gleichem Material (Polyvinylchlorid) aus einem größeren Durchmesser und einer größeren Wandstärke. Deshalb kann der Schubschlauch 21 die Kraft für das Einfahren der Sonde 1 durch einen nicht dargestellten Führungsschlauch über 30 und mehr Meter übertragen, wenn darin nur wenige Bogen mit schwacher Krümmung liegen. Die Länge des flexibleren Teils 12 beträgt dagegen vorzugsweise soviel wie die Länge des längsten, mit der Sonde zu prüfenden Bogens des nicht dargestellten U-Rohrbündels, der wegen seines kleinen Krümmungsradius nicht mit dem normalen, steifen Schubschlauch 21 passiert werden kann.

6 Patentansprüche
1 Figur

Patentansprüche

1. Einrichtung zur Prüfung der Rohre von Wärmetauschern mit einem U-Rohrbündel, wobei eine Prüfsonde mit einem flexiblen Schubschlauch in ein Rohr des Bündels geschoben wird, dadurch gekennzeichnet, daß der Schubschlauch in seiner Längsrichtung zwei Teile (12, 21) unterschiedlicher Flexibilität umfaßt, und daß der Teil (12) mit der größeren Flexibilität der Prüfsonde (1) zugekehrt und wesentlich dünner als das Rohr ist und gerundete Zentrierkörper (13) trägt, die den Schubschlauch (12) ringförmig umgeben.

2. Einrichtung nach Anspruch 1, dadurch gekennzeichnet, daß die Prüfsonde (1) auf der dem Schubschlauch (12) abgekehrten Seite ein ähnlich flexibles Schlauchstück (11) mit einer Einführungsspitze (18) trägt.

3. Einrichtung nach Anspruch 1 oder 2, dadurch gekennzeichnet, daß sich der flexiblere Teil (12) über annähernd der Länge eines Schenkels des U-Rohrbündels erstreckt.

4. Einrichtung nach Anspruch 1, 2 oder 3, dadurch gekennzeichnet, daß der Elastizitätsmodul des flexibleren Teiles (12) um 25 bis 50 % kleiner ist als der des anderen Teiles.

5. Einrichtung nach Anspruch 1, 2 oder 3, dadurch gekennzeichnet, daß beide Teile (12, 21) aus dem gleichen Material bestehen, und daß der Querschnitt des flexibleren Teiles (12) kleiner ist als der des anderen Teiles (21).

6. Einrichtung nach Anspruch 5, d a d u r c h
g e k e n n z e i c h n e t , daß beide Teile (12, 21)
einen Ringquerschnitt mit gleichem Außendurchmesser
haben und daß der Innendurchmesser des flexiblen Teiles
größer als der des anderen Teiles ist.

0009575

Nummer der Anmeldung

EP 79 102 888.9

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 488 833 (UNITED KINGDOM ATOMIC ENERGY AUTHORITY) <br> * Fig. 1 und 2d mit Beschreibung * <br> -- | 1-3, 5,6 |
| A | DE - A1 - 2 702 280 (COMMISSARIAT A L'ENERGIE ATOMIQUE) <br> * ganzes Dokument * <br> -- | |
| A | DE - A1 - 2 635 537 (COMMISSARIAT A L'ENERGIE ATOMIQUE) <br> * ganzes Dokument * <br> -- | |
| A | US - A - 3 916 302 (MADEWELL) <br> * ganzes Dokument * <br> -- | |
| A,D | DE - C - 2 263 143 (SIEMENS) <br> * ganzes Dokument * <br> ---- | |

**KLASSIFIKATION DER ANMELDUNG (Int.Cl.3)**

G 01 N 27/82
G 21 C 17/00
G 21 D 5/08

**RECHERCHIERTE SACHGEBIETE (Int. Cl.3)**

G 01 N 27/82
G 21 C 17/00
G 21 D 5/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

[X] Der vorliegende Recherchenbericht wurde für alle Patentansprüche erstellt.

| Recherchenort | Abschlußdatum der Recherche | Prüfer |
|---|---|---|
| Berlin | 03-12-1979 | SCHWARTZ |

EPA form 1503.1 06.78